# EUROPEAN PATENT SPECIFICATION

(11) **EP 1 549 570 B1**
(45) Date of publication and mention of the grant of the patent: **07.05.2008**
(21) Application number: 03795537.4
(22) Date of filing: 12.09.2003
(51) Int. Cl.: B65D 85/48, B65G 49/06

(54) **PACKAGING DEVICE FOR PACKING SHEET UNITS**
VORRICHTUNG ZUR VERPACKUNG VON PLATTENEINHEITEN
DISPOSITIF D'EMBALLAGE POUR L'EMBALLAGE D'UNITES DE FEUILLES

(30) Priority: 13.09.2002 SE 0202757
(43) Date of publication of application: 06.07.2005
(73) Proprietor: Eriksson, Lars, 361 31 Emmaboda (SE)
(72) Inventor: Eriksson, Lars, 361 31 Emmaboda (SE)
(74) Representative: Bjelkstam, Peter
(86) International application number: PCT/SE2003/001429
(87) International publication number: WO 2004/024597

(56) References cited:
- DE-A1- 4 343 466
- DE-U1- 8 428 512

## Description

The present invention refers to a packaging device, for packing sheet units, preferably glass sheets, said packaging device comprises storage units for the return transport of packaging material.

Problems arise with commercially available arrangements of the design under consideration here concerning what is to be done with packaging material that remains when an item is unpacked at a customer. Glass manufacturers such as Pilkington, Glaverbel, Sant Gobain, etc., or others are handling glass sheets on supports, which are manufactured mainly from metal profiles or similar. The glass sheets are packaged somewhat inclined, relative to the vertical direction, against the side of the support, whereby rubber or felt or other material that is gentle for the glass covers the profiles at the bottom and sides and that is permanently anchored in place. A number of glass sheets are packaged together, such that a glass package is formed, whereby spacers are used between the package such that the glass can be transported in a gentle manner. Approximately 50-60 spacers per support are needed at large suppliers. The supports are essentially identical at all of the abovenamed glass suppliers. Furthermore, corner protectors, pads, etc. are used around the glass packages in order to protect them. Spacers, corner protectors, pads, etc. are loose pieces, often made from cheap disposable material of card, paper, that are placed between one or several glass sheets on the support.

The problem with these packaging materials is that they are left and litter the customer's premises once the glass sheets have been removed from the support by the customer, when the support is empty.
The glass supplier is, according to certain regulations, obliged to receive the packaging materials in return, but this is difficult since interest in returning them is low since it requires extra work and major expense. It is too difficult to collect the packaging material, whereby the packaging material often remains lying on the floor indoors or outdoors, and is there ruined, making it impossible to reuse the packaging material and it costs too much to repurchase new. It is easy that placing the packaging material into various containers that have been placed at various locations at a customer fails, since the locations of the containers are unknown, or they are located too far away to carry materials to them.

The object of the present invention is to solve the problems described above by providing the packaging devices, preferably the supports, with storage units, which are applied directly or indirectly to the supports, whereby they are always connected to the packaging devices, which are returned to the supplier for reuse.

Thanks to the invention storage units in the form of spaces on, in and beside said packaging device. The support is built up from profiles, which are built from various materials such as, for example, metal, wood, plastic, rubber and combinations of these materials, said support comprises a bottom that is inclined somewhat inwards towards the support relative to the horizontal plane and a side that is inclined somewhat relative to a vertical line, whereby the glass sheets are resting in a standing position in the support. The support is placed onto a base, preferably in a glass warehouse in, for example, a factory manufacturing insulating windows, where large glass sheets of dimensions of approximately 3 x 6 m are cut down to significantly smaller dimensions. Many different designs of the packaging devices are, of course, possible. However, the described packaging device is the most common for glass sheets. During unpacking, unloading, of the glass sheets, the packaging material, which is usually located standing between one or several glass sheets, is removed. Several glass sheets constitute a glass package. The packaging material in this case is constituted by spacers, and it has a cross-sectional dimension of 20-30 mm x 50-80 mm. The spacers are placed principally in a vertical direction between the glass packages. The glass packages can be lifted from the support with the aid of lifting devices, in that the spacers create a space between the glass packages that provides space for placing lifting lines around the glass packages. The spacers are then placed into the storage units, which are connected directly or indirectly to the support, such that the spacers in the support are returned, being transported back to the glass supplier with the support without glass sheets. Since the storage units are connected to the support, it is easy for those who are unloading the glass sheets to subsequently place the packaging material into the storage units. In the absence of the storage units, the packaging material must be left lying and littering until somebody tidies up and places it into a container, which, however, must first be located. It is significantly easier according to the invention to place the packaging material into the storage units, which are directly permanently connected to the support or which are indirectly connected in that they are connected to the packaging device. In a preferred embodiment example of the invention, the storage units are placed under and at one side of the support. The spacers are in this case approximately 3 m long, whereby there is automatically space for them along the length of the support, which is considerably longer than 3 m, often somewhat longer than 6 m, whereby double spaces are available along the side of a support in a line after each other. A large number normally approximately 40 spacers per support can, in this way, be placed into the storage units, which can be designed as longitudinal pipes or parts of pipes, clips, guides, boxes, tapes, compartments, etc., and which guarantee that the spacers are well-secured during the return transport of the support. The spaces can have different shapes of cross-sectional area what concerns pipes, boxes, compartments; such as round, square, triangular, irregularly shaped, etc. The storage units store one or several spacers that are joined to or inserted into the same. The storage units can, according to the invention, be designed as open or closed spaces with or without a lid. The lids protect the packaging material from the various effects of damp, light, dirt, foreign particles, chemicals, etc., in closed spaces, whereby it is not damaged during the return transport or in cases where the support remains standing, such that it can be reused. If the packaging material has been manufactured from a material that resists various influences as described above, then the packaging material does not need to be placed into closed spaces, and the spaces of the storage units can be open. Handling costs for the packaging material are in this way reduced.

The handling according to the invention of the packaging material that has been described here can be compared with a return system, such as that used for empty crates and empty bottles, whereby the empty crates accompany the transport back to the brewery from which they came. The spacers can, as returned bottles, be used several times, as also crates, which correspond to the storage units in the support, being, as has been described, placed next to each other. The principal advantages of the invention are the creation of a return system for packaging material, preferably for spacers between glass packages that are easily and essentially automatically returned to the supplier, preferably the glass supplier, without large extra costs. This is advantageous for the environment. If the spacers are reused, further large costs are saved. If the return system is used by several glass suppliers, the support with the storage units can circulate between several customers and several glass suppliers, just as is now carried out between several breweries. Even more money is saved in this case. The support must, in any case, be returned to the glass suppliers in order for it to be reused at the loading arrangements adapted for these, which are available for the lorries that provide transport between supplier and customer.

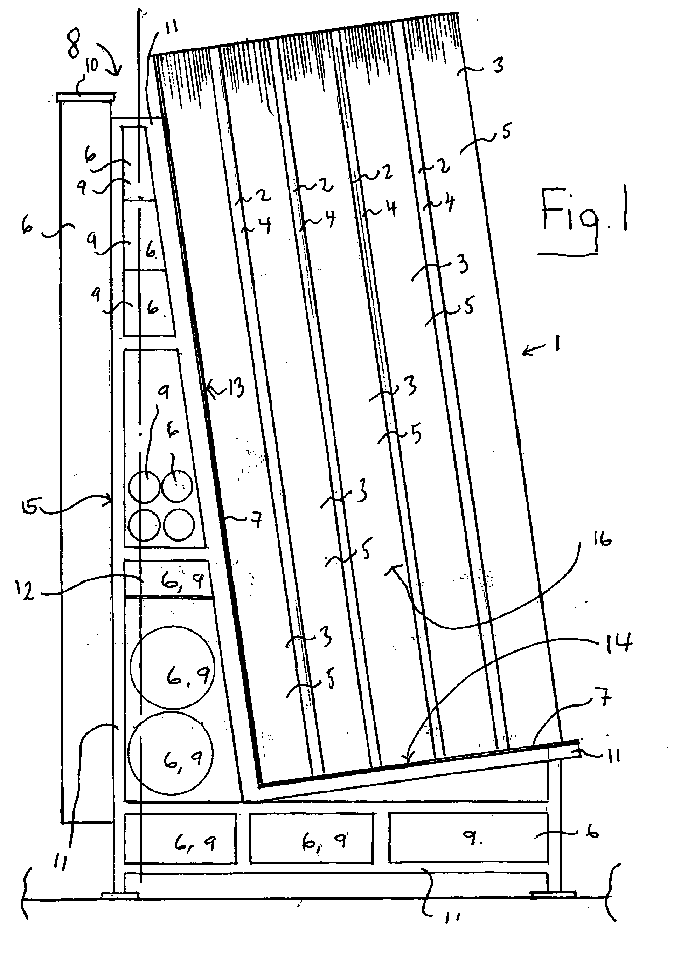

The invention is described in more detail below with the aid of some preferred embodiment exapmles, in which
- Figure 1: shows a view of a support seen from its end, on which a number of glass packages and intermediate spacers have been packed.

As the embodiment of the invention that is shown in Figure 1 makes clear, the packaging device 1 is shown, which is a support 8 constructed by profiles 11 having a base 14 covered with a soft cover 7 and which is inclined somewhat inwards relative to a horizontal plane against the support 8, and a side 13 essentially inclined somewhat relative to a vertical line 12 against a rear side 15 of the support 8 and which also is covered with a soft cover 7. The support 8 comprises a number of storage units 6 in the form of spaces 9. During unpacking and unloading of the glass sheets 3, which are packed into glass packages 5, an intermediate packaging material 2, in the form of spacers 4, is freed, and these are then placed into storage units 6, which are connected directly or indirectly, standing or lying, to the support 8. If they are lying, the spacers 4 can be inserted in a direction against one end 16 of the support 8. The storage units 6 according to the invention can, naturally, be placed both standing and lying onto the support 8. The storage units 6 are provided with lids 10, which can enclose the spaces 9 and seal these when storing the spacers 4.

## Claims

1. A packaging device (1) including a support (8) for sheet units, preferably glass sheets (3), **characterized in that** the packaging device (1) comprises at least one storage unit (6), which is directly or indirectly connected to the support (8) and constitutes an elongated space (9) , in which during return transport of the packaging device (1), packaging material (2) such as spacers (4) can be carried.

2. A device according to claim 1, **characterized in that** said spacers (4) are provided between one or several glass sheets (3) and/or glass packages (5).

3. A device according to claim 1, **characterized in that** the support (8) is constructed from profiles (11) which have been screwed, welded, or by another method joined, and which comprises a base (14) that is somewhat inclined relative to a horizontal plane into the support (8), and which furthermore comprises a side (13), that is somewhat inclined relative to a vertical line (12) against an existing rear edge (15) of the support (8), whereby said glass sheets (3) rest standing in the support (8) and during unpacking, unloading of the glass sheets (3), the spacers (4) are removable as they are freed from the glass sheets (3) and they are subsequently placable into the storage units (6).

4. A device according to claim 1, **characterized in that** the storage units (6) are applied to at least one of the following locations such as under, over, beside the glass sheets (3) in the support (8), between the profiles (11), whereby a large number of spacers (4) can be accommodated in the storage units (6).

5. A device according to claim 1, **characterized in that** the storage units (6) are connected by means of at least one of the following methods, such as, for example, screwing, welding, hooking, snap attachment, attachment, gluing or removable attachment by means of a connecting means or similar at, in or on the support (8).

6. A device according to claim 4, **characterized in that** the storage units (6) are designed as, for example, longitudinal pipes of parts of pipes, clips, guides, boxes, tapes, compartments, etc., which are attached to the support (8), which storage units (6) are designed as open or closed spaces (9) with or without a lid (10), which closed spaces (9) protect the spacers (4) from the various influences of damp, light, dirt, foreign objects, chemicals, etc., in closed spaces, whereby they are not damaged during the return transport or when the support (8) remains standing, such that they can be reused.

7. A device according to claim 6, **characterized in that** the spacers (4) are manufactured from a material such as, for example, plastic, metal, wood, paper or combinations of these materials.

8. A device according to claim 7, **characterized in that** the spacers (4) resist various influences of, for example, damp, light, dirt, foreign objects, chemicals, etc., whereby the storage units (6) can be designed to be open.

## Patentansprüche

1. Verpackungsvorrichtung (1), die eine Halterung bzw. Stütze (8) für Platteneinheiten, bevorzugt Glasplatten (3), enthält, **dadurch gekennzeichnet, dass** die Verpackungsvorrichtung (1) wenigstens eine Lagereinheit (6) umfasst, die direkt oder indirekt mit der Stütze (8) verbunden ist und einen länglichen Raum (9) darstellt, in dem während des Rücktransports der Verpackungsvorrichtung (1) Verpackungsmaterial (2), wie zum Beispiel Abstandshalter (4), getragenen werden können.

2. Vorrichtung nach Anspruch 1, **dadurch gekennzeichnet, dass** die Abstandshalter (4) zwischen einer oder mehreren Glasplatten (3) und/oder Glasverpackungen (5) vorgesehen sind.

3. Vorrichtung nach Anspruch 1, **dadurch gekennzeichnet, dass** die Stütze (8) aus Profilen (11) gebaut ist, die geschraubt, geschweißt oder auf eine andere Weise verbunden sind, und die eine Basis (14) aufweist, die in Bezug auf eine horizontale Ebene leicht in die Stütze (8) geneigt ist, und die ferner eine Seite (13) aufweist, die leicht in Bezug auf eine vertikale Linie (12) gegen eine existierende hintere Kante (15) der Stütze (8) geneigt ist, wodurch die Glasplatten (3) stehend in der Stütze (8) ruhen und die Abstandshalter (4) während des Auspackens, Entladens der Glasplatten (3), entfernbar sind, sobald sie von den Glasplatten (3) befreit sind, und anschließend können sie in den Lagereinheiten (6) platziert werden.

4. Vorrichtung nach Anspruch 1, **dadurch gekennzeichnet, dass** die Lagereinheiten (6) an wenigstens einer der folgenden Stellen, wie unter, über, neben den Glasplatten (3) in der Stütze zwischen den Profilen (11) aufgebracht werden, wodurch eine große Anzahl an Abstandshaltern (4) in den Lagereinheiten (6) beherbergt werden kann.

5. Vorrichtung nach Anspruch 1, **dadurch gekennzeichnet, dass** die Lagereinheiten (6) durch wenigstens eines der folgenden Verfahren verbunden sind, wie beispielsweise Schrauben, Schweißen, Haken, Klickverschließen, Hängen, Kleben oder lösbares Befestigen mithilfe von Verbindungsmitteln oder ähnlichem an, in oder auf die Stütze (8).

6. Vorrichtung nach Anspruch 4, **dadurch gekennzeichnet, dass** die Lagereinheiten (6) beispielsweise als längliche Rohre von Teilen von Rohren, Klipps, Führungen, Schachteln, Bändern, Fächer usw. ausgestaltet sind, die an der Stütze (8) befestigt sind, wobei die Lagereinheiten (6) als offene oder geschlossene Räume (9) mit oder ohne Deckel (10) ausgestaltet sind, wobei die geschlossenen Räume (9) die Abstandshalter (4) vor den verschiedenen Einflüssen von Feuchtigkeit, Licht, Schmutz, Fremdkörper, Chemikalien usw. in geschlossenen Räumen schützen, wodurch sie während des Rücktransports oder wenn die Stütze (8) stehen bleibt nicht beschädigt werden, so dass sie wiederverwendet werden können.

7. Vorrichtung nach Anspruch 6, **dadurch gekennzeichnet, dass** die Abstandshalter (4) aus einem Material wie beispielsweise Kunststoff, Metall, Holz, Papier oder Kombinationen aus diesen Materialien hergestellt sind.

8. Vorrichtung nach Anspruch 7, **dadurch gekennzeichnet, dass** die Abstandshalter (4) den verschiedenen Einflüssen von beispielsweise Feuchtigkeit, Licht, Schmutz, Fremdkörpern, Chemikalien usw. standhalten, so dass die Lagereinheiten (6) offen gestaltet sein können.

## Revendications

1. Dispositif ( 1 ) d'emballage comprenant un support ( 8 ) pour des unités de feuille, de préférence des feuilles ( 3 ) de verre, **caractérisé en ce que** le dispositif ( 1 ) d'emballage comprend au moins une unité ( 6 ) de stockage, qui est reliée directement ou indirectement au support ( 8 ) et constitue un espace ( 9 ) oblong dans lequel, pendant le transport de retour du dispositif ( 1 ) d'emballage, du matériau ( 2 ) d'emballage, tel que des intercalaires ( 4 ), peut être porté.

2. Dispositif suivant le revendication 1, **caractérisé en ce que** les intercalaires ( 4) sont prévues entre une ou plusieurs feuilles ( 3 ) de verre et/ou emballages ( 5 ) de verre.

3. Dispositif suivant la revendication 1, **caractérisé en ce que** le support ( 8 ) est construit en profilés ( 11 ) qui ont été vissés, soudés ou assemblés par un autre procédé et qui comprennent une base ( 14 ) qui est quelque peu inclinée par rapport à un plan horizontal dans le support ( 8 ) et qui comprend en outre un côté ( 13 ) qui est quelque peu incliné par rapport à une ligne ( 12 ) verticale contre un bord ( 15 ) arrière existant du support ( 8 ), les feuilles ( 3 ) de verre reposant debout dans le support ( 8 ) et, pendant le déballage, le déchargement des feuilles (3) de verre, les intercalaires ( 4 ) peuvent être enlevés en étant dégagés des feuilles ( 3 ) de verre et on peut les placer ensuite dans les unités ( 6 ) de stockage.

4. Dispositif suivant la revendication 1, **caractérisé en ce que** les unités ( 6 ) de stockage sont appliquées à au moins l'un des emplacements suivants, tel que en dessous, au-dessus, à côté des feuilles ( 3 ) de verre dans le support ( 8 ) entre les profilés ( 11) de manière à pouvoir loger un grand nombre d'intercalaires ( 4 ) dans les unités ( 6 ) de stockage.

5. Dispositif suivant la revendication 1, **caractérisé en ce que** les unités ( 6 ) de stockage sont reliées au moyen d'au moins l'un des procédés suivants, tels que par exemple vissage, soudage, crochetage, encliquetage, fixation, collage ou fixation amovible au moyen d'un moyen de connexion ou semblable à, dans ou sur le support ( 8 ).

6. Dispositif suivant là revendication 4, **caractérisé en ce que** les unités ( 6 ) de stockage sont conçues par exemple sous la forme de conduits longitudinaux, de parties de conduit, d'agrafes, de guides, de rubans, de compartiments, etc. qui sont fixés au support ( 8 ), ces unités ( 6 ) de stockage étant conçues sous la forme d'espaces ( 9 ) ouverts ou fermés avec ou sans un couvercle ( 10 ), des espaces ( 9 ) fermés protégeant des intercalaires ( 4 ) des influences diverses de la vapeur d'eau, de la lumière, de la saleté, des objets étrangers, des produits chimiques, etc. dans des espaces fermés de sorte qu'ils ne sont pas endommagés pendant le transport de retour ou lorsque le support reste debout de sorte qu'ils peuvent être réutilisés.

7. Dispositif suivant la revendication 6, **caractérisé en ce que** les intercalaires ( 4 ) sont en un matériau, tel que par exemple en matière plastique, en métal, en bois, en papier ou en combinaison de ces matériaux.

8. Dispositif suivant la revendication 7, **caractérisé en ce que** les intercalaires ( 4 ) résistent à diverses influences, par exemple à la vapeur d'eau, à la lumière, aux objets étrangers, aux produits chimiques, etc. de sorte que les unités ( 6 ) de stockage peuvent être conçues pour être ouvertes.
